# EUROPEAN PATENT APPLICATION

(11) **EP 0 724 833 A2**
(43) Date of publication of application: **07.08.1996**
(21) Application number: 96101528.6
(22) Date of filing: 02.02.1996
(51) Int. Cl.: A21D 2/18, A23G 9/02

(54) **Producing method of baked confectionery and ice product using the same**

(30) Priority: 03.02.1995 JP 17384/95; 09.05.1995 JP 110982/95
(71) Applicant: MEIJI SEIKA KAISHA LTD., Chuo-ku Tokyo (JP)
(72) Inventor: Oneda, Toru, c/o Meiji Seika Kaisha, Ltd., Sakado-shi, Saitama (JP); Ishida, Kaoru, c/o Meiji Seika Kaisha, Ltd., Sakado-shi, Saitama (JP); Yasuda, Atsushi, c/o Meiji Seika Kaisha, Ltd., Sakado-shi, Saitama (JP); Mochizuki, Keizo, c/o Meiji Seika Kaisha, Ltd., Sakado-shi, Saitama (JP)
(74) Representative: WILHELMS, KILIAN & PARTNER Patentanwälte

(57) **Abstract**

The present invention provides a producing method of a baked confectionery used for an ice and a producing method of an ice product using the baked confectionery. The producing method of a baked confectionery for an ice according to the present invention is characterized by: mixing a dough of a baked confectionery comprising strong flour with from 0.5 % to 10.0 %, preferably 0.5 % to 5.0 %, by weight of avicel. The ice product of the ice product according to the present invention uses the baked confectionery produced in the above method.

## Description

### BACKGROUND OF THE INVENTION

### 1. Field of the Invention

The present invention relates to a producing method of a baked confectionery such as a biscuit, a cookie and the like, and a producing method of an ice product using the baked confectionery.

### 2. Description of the Related Art

Conventionally, the combination product of an ice and a baked confectionery is limited to be a sand-ice in which an ice is sandwitched by the baked confectionery, a cup-ice, a chou-ice, a rolled-ice and the like. Generally, the baked confectionery absorbs moisture so as to lose the initial eating feel thereof. Accordingly, the baked confectionery is limited to be applied to the ice described above. The baked confectionery absorbs moisture of the ice, so that the hardness (eating feel) of the baked confectionery is loot as time goes by. Therefore, particularly, the baked confectionery has not been used as the stick of an ice cream in industrial.

The baked confectionery such as biscuit and cookie has been improved to be softened. However, a producing method of the baked confectionery whose eating feel does not change even if it absorbs moisture has not been much examined. The baked confectionery applied to the ice must have a proper hardness and take a long time for being softened due to the moisture absorption. A technic for realizing the baked confectionery having such qualities has not been accomplished.

Incidentally, Unexamined Japanese Patent Publication Nos. Sho. 49-109565, Sho. 49-109566 and Sho. 49-109567 disclose that a baked confectionery containing avicel in the amount of from 0.5 weight% to 5 weight%. However, these publications do not disclose or suggest to maintain the resistance to moisture softening and apply it to ice, but merely disclose to maintain the shape of a dough of the baked confectionery containing avicel.

Further, conventionally, a hard material such as wood or plastic has been used as the stick of ice. In the producing method of such an ice, first, raw material of ice in an ice making tube is cooled to be half-solid. The stick is forcibly stuck into the raw material so that the stick achieves to the center of the ice at short time, for example, less than 4 sec. Then, the raw material of ice is further cooled to be solid. Thereafter, the stick is gripped and pulled so that the ice is pulled out from the ice making tube.

However, the above method has the following problem. Since the stick is gripped so as to forcibly pull out the ice, the stick needs a strength for resisting the gripping force and the pulling-out force from the ice making tube. Therefore, it is impossible to use the baked confectionery used as the stick of ice.

### SUMMARY OF THE INVENTION

It is an object of the present invention to provide a baked confectionery having a suitable hardness for using an ice, and taking a lot of time to be softened by moisture.

In a producing method of a baked confectionery according to the present invention, a dough including strong flour contains avicel in an amount of from 0.5 weight% to 10.0 weight%, preferably from 0.5 weight% to 5.0 weight%, based on an amount of the dough.

The baked confectionery produced by the above method can be used for a producing method of an ice product according to the present invention.

The baked confectionery produced by the producing method of the present invention can be used as a stick of an ice without break and softening for long time.

### BRIEF DESCRIPTION OF THE DRAWINGS

In the accompanying drawings:
Fig. 1 shows an adopter of a hardness measuring device;
Fig. 2 shown a relation between the hardness and the adding ratio of avicel;
Fig. 3 shows a relation between an absorbed water content and hardness when a biscuit is caused to forcibly absorb water;
Fig. 4 shows a variation of hardness of a biscuit which is inserted in an ice cream;
Fig. 5 shows a device for inserting a stick in an ice cream;
Fig. 6 shows a remover; and
Fig. 7 is a specific view showing a holder portion of Fig. 1.

### DETAILED DESCRIPTION OF THE INVENTION

Detailed description of the present invention will be described as follows referring to the accompanying drawings.

A combination ice according to the present invention includes an ice such as ice cream, lact-ice and ice candy, and a baked confectionery such as cookie, biscuit, and pie. In the present invention a dough of the baked confectionery made of strong flour including avicel in an amount of from 0.5 weight% to 10.0 weight%, preferably from 0.5 weight% to 5.0 weight%, based on on amount of the dough.

In the present invention, the dough may be prepared in the following manner. Strong flour in an amount of 400 parts to 700 parts, sugar in an amount of 80 parts to 120 ports, oil in an amount of 80 parts to 120 parts, baking powder in on amount of 10 parts to 20 parts, and a little emulsifier are mixed with a suspension in which avicel in an amount of 5 parts to 50 parts is suspended in a little water. Water which gives suitable softness to the mixture and a small amount of enzyme are added to the mixture, and further the mixture is kneaded and mixed by a needer to make a dough. The dough is fermented for 1 to 3 hours in a conventional method, and thereafter the dough is rolled and struck to be suitable shape.

An oven having four zone is used. The roasting condition of the oven is indicated in the following Table 1.

**Table 1**

| ZONE | Temperature of upper heater (°C) | Temperature of lower heater (°C) |
|---|---|---|
| FIRST | 120-150 | 80-150 |
| SECOND | 180-210 | 120-160 |
| THIRD | 190-230 | 140-180 |
| FOURTH | 190-230 | 140-180 |

The dough is baked in the oven for 10 to 15 minutes, and thereafter, vegetable oil is sprayed on the dough so as to cool it.

A specific example indicated in the following Table 2 was produced.

**Table 2**

| material | ratio (parts) |
|---|---|
| strong flour | 500 |
| sugar | 100 |
| vegetable oil | 80 |
| baking powder | 20 |
| lecithin | 2 |

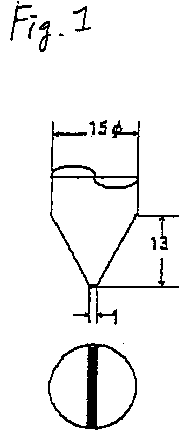

A dough made of the mixture indicated in Table 2 was mixed and kneaded. The dough was fermented for 2 hours at 40°C, and baked in the condition described in Table 1 to produce a biscuit of first comparative example. Thereafter, the hardness of the dough was measured. The measurement was conducted by the measuring device of NRM-201J-CW produced by Hudo Kogyo K.K. in a measurement condition of moving speed of 30 cm/min., and an adopter thereof is shown in Fig. 1.

A biscuit of a second example was produced in the same manner as the first comparative example except that weak flour is used in spite of strong flour. In addition, as specific example of the present invention, four biscuit were produced in accordance with the same manner as the first comparative example except that the examples contain avicel of 1, 2, 3, and 5 weight%, respectively.

Fig. 2 shows a relation between the hardness and the adding ratio of avicel. The biscuit made of strong flour was apparently harder than the biscuit containing weak flour. In addition, since the biscuit of first comparative example contained no avicel, it was difficult to control the dough thereof and to obtain uniform biscuit. Therefore, it was confirmed that the biscuit having a high initial hardness can be obtained by mixing avicel as described above.

The biscuits thus obtained was forcibly caused to absorb moisture to examine a relation between water content and hardness. The biscuits were in an atmosphere of 80%RH for a predetermined time, and thereafter, the hardness and water content of the biscuits were measured. The measurement of the hardness was conducted by a rheometer. The water content was measured in a drying under reduced pressure. Fig. 3 shows the relationship between the absorbed water content and hardness. As shown in Fig. 3, a moisture softening point of the biscuit containing no avicel is less than 9 % of water content, where the biscuit can not maintain its eating feel. On the other hand, even if the water content of the biscuit containing 1 weight% of avicel becomes 10 %, its hardness is more than 1.5 Kg, so that the biscuit can maintain its eating feel. Thus, if avicel is mixed with the biscuit, the hardness of the biscuit can be strong and softening of the biscuit due to absorbing moisture can be suppressed.

Next, the biscuits were inserted into an ice cream, and cycle tests were conducted at -5°C to -24°C to measure the hardness of the biscuits. Used ice cream contains 10 % of milk fat and 16 % of milk solid. The hardness of the biscuits was measured by the rheometer. The result of the tests are shown in Fig. 4. As shown in Fig. 4, the biscuit made of weak flour lost its eating feel after elapsing 10 days, thereby having no commercial value. Further, the biscuit made of strong flour containing no avicel lost its eating feel after elapsing 20 days. On the other hand, the biscuit made of strong flour containing 2 weight% was possible to suppress lowering its hardness to be more than 1.5 Kg even after elapsing 20 days, thereby having sufficient commercial value.

Further, a producing method of an ice using the baked confectionery of the present invention will be described as follows.

Raw material of the ice is filled with an ice making tube of a conventional stick ice producing machine. Baked confectioneries as sticks held by a holder one by one were inserted in the center of the raw material of ice which is not frozen. It is necessary that the holder can surely hold the baked confectionery in vertical. In order to certainly insert the stick into the raw material, the holder is provided with a concave portion and the ice making tube is provided with a convex portion. Accordingly, the concave and convex portions bite each other to insert into the center of the raw material. The raw material is forwarded through a VITA-line at -35°C for a predetermined time under a condition that the concave and convex portions bite each other. Accordingly, the raw material is frozen without shifting the position of the stick. The holder and ice making tube are attached each other at the low temperature. Accordingly, it is preferable that they are frozen and fixed each other. After freezing the raw material, the holder is released from the stick. Thus, the ice to which the baked confectionery is fixed at the center thereof remains in the ice making tube. At the time of releasing, the holder have to be pulled up in vertical direction.

After releasing the holder, hot water at about 25°C is applied to whole of the surface of the ice making tube to melt the surface of the ice. Accordingly, it is made easy to take the ice out from the ice making tube. Then, the baked confectionery is directly gripped and pulled out from the ice making tube. If the heating by hot water is insufficient, the baked confectionery may be broken at a time of pulling out the ice. On the other hand, if the heating by hot water is exceeded, much ice remains on the surface of the ice making tube after pulling it out, thereby lowering the commercial quality of the ice.

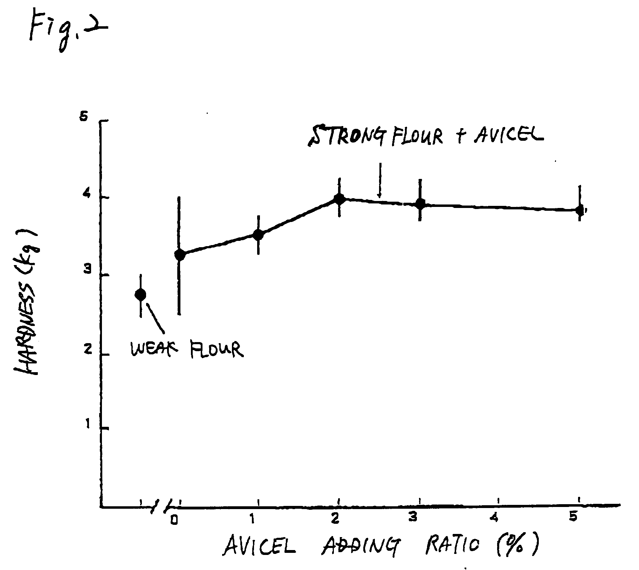

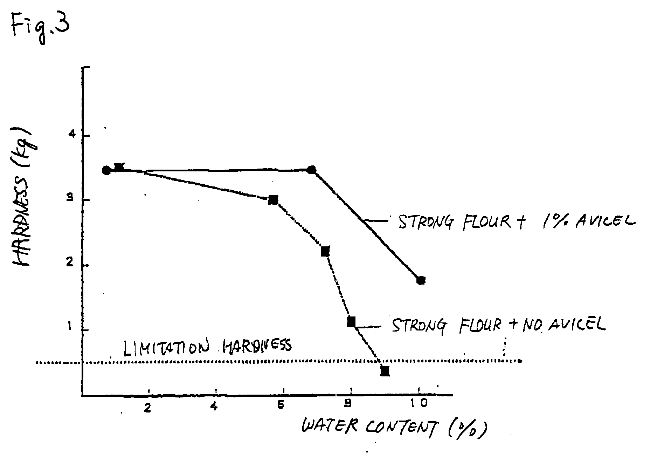

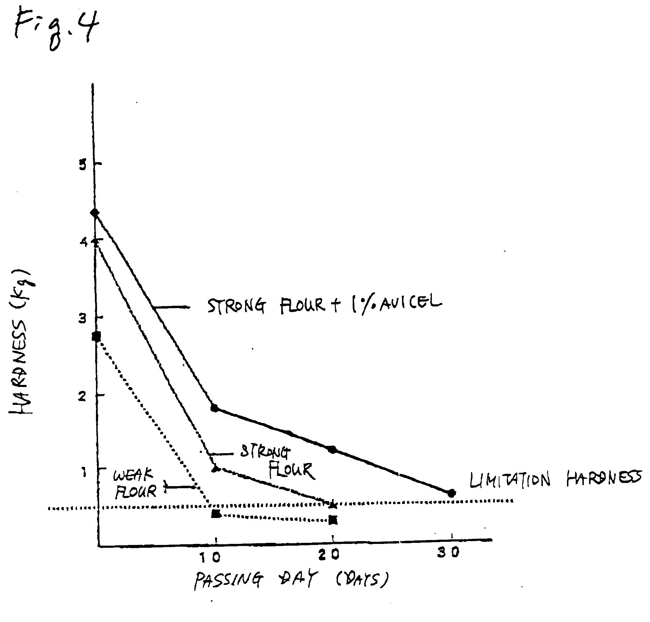

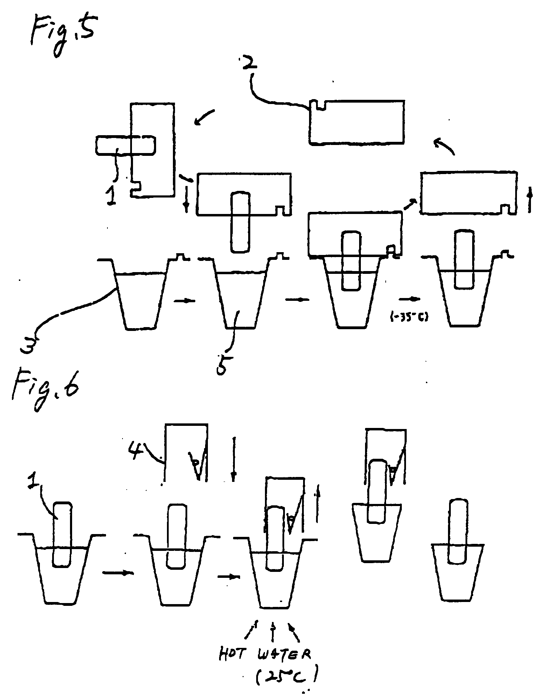

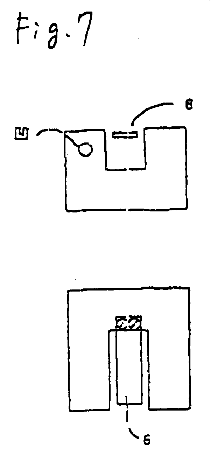

On embodiment of the producing method according to the present invention will be described referring to Figs. 5 to 7.

A biscuit 1 introduced from a general arranging device (not shown) is introduced one by one into a holder 2. The biscuit 1 is fixed in the holder 2 by a plate spring 6 in the holder 2. A raw material of an ice cream is injected into an ice making tube 3. A concave portion of the holder 2 and a convex portion of the ice making tube 3 are bitten each other so that the biscuit is inserted into the center of the raw material of the ice cream, and then the holder 2 and the ice making tube 3 are forwarded to a brine tank. The raw material of the ice cream is cooled in the brine tank for more than 2 minutes at -35°C while maintaining the biscuit in vertical.

After the raw material of the ice cream is sufficiently freezed, a gripper 4 directly grips the biscuit 1 standing vertically. Then, hot water at about 25°C is applied to the surface of the ice tube 3, and the biscuit 1 is pulled out from the ice making tube 3 to obtain the ice cream into which the biscuit 1 is vertically inserted.

In the above embodiments, the baked confectionery of the present invention is used as the stick of the ice. However, the baked confectionery of the present invention is not limited to use as the stick of the ice, but can be used as a cup of the ice, for mixing with the ice, for sandwitching the ice, and for wrapping the ice. That is, in the present invention, the baked confectionery is used so that a part of the baked confectionery contacts with the ice.

The baked confectionery used in the present invention is a hard biscuit, a soft biscuit, a cracker, a pie, a puff or the like. The hard biscuit and cracker is preferable to used as the stick of the ice. In addition, the ice used in the present invention is an ice cream, a lact-ice, an ice candy or the like.

## Claims

1. A producing method of a baked confectionery for an ice characterized by: mixing a dough of a baked confectionery comprising strong flour with from 0.5 % to 10.0 % by weight of avicel.

2. A producing method according to claim 1, characterized in that: the strong flour contains from 0.5 % to 5.0% by weight, based on the amount of the dough, of the avicel.

3. A producing method according to claim 1, characterized in that: when the avicel is dispersed in water, the avicel returns to cellulose crystal and the diameter of the avicel is less than 1 µm.

4. The baked confectionery produced by the method according to claim 1, which is inserted in the center of the ice to used as a stick of the ice.

5. The baked confectionery produced by the method according to claim 1, which is used to be mixed with the ice.

6. The baked confectionery produced by the method according to claim 1, which is used to sandwich the ice.

7. The baked confectionery produced by the method according to claim 1, which is used to wrap the ice.

8. A producing method of an ice product using a baked confectionery characterized by comprising the step of: contacting at least a part of a baked confectionery, a dough of the bled confectionery comprising strong flour containing from 0.5 % to 10.0 % by weight of avicel, with an ice.

9. A producing method according to claim 8, characterized in that, the dough of the baked confectionery comprises strong flour containing, from 0.5 % to 5.0 % by weight of the avicel.

10. A producing method according to claim 8, characterized in that when the avicel is dispersed in water, the avicel returns to cellulose crystal and the diameter of the avicel is less than 1 µm.

11. A producing method according to claim 8, characterized in that, said contacting step comprises the step of inserting at least a part of the baked confectionery having stick shape into the ice at substantially center of the ice.

12. A producing method according to claim 8, characterized in that: said contacting step comprises the stop of sandwitching the ice between the baked confectionery.

13. A producing method according to claim 8, characterized in that: said contacting step comprises the step of wrapping the ice by the baked confectionery.

14. A producing method according to claim 8, characterized in that: said contacting step comprising the stop of mixing the baked confectionery within the ice.
